# EUROPEAN PATENT APPLICATION

(11) **EP 2 363 745 A1**
(43) Date of publication of application: **07.09.2011**
(21) Application number: 10075694.9
(22) Date of filing: 02.12.2002
(51) Int. Cl.: G02F 1/167, G09G 3/20, G09G 3/34

(54) **Image display device**

(30) Priority: 10.12.2001 JP 2001375569; 17.12.2001 JP 2001383041; 18.12.2001 JP 2001384718
(62) Divisional of application: 02783739.2
(71) Applicant: Bridgestone Corporation, Tokyo 104-8340 (JP)
(72) Inventor: Nihei, Norio, Tokyo 187-0031 (JP); Murata, Kazuya, Tokyo 187-8531 (JP); Masuda, Yoshitomo, Tokyo 205-0023 (JP); Kawagoe, Takahiro, Saitama 359-1105 (JP); Yakushiji, Gaku, Kodaira City, Tokyo (JP); Takagi, Koji, Kanagawa 211-0051 (JP); Kitano, Hajime, Tokyo 187-8531 (JP)
(74) Representative: Oxley, Robin John George

(57) **Abstract**

An image display device has an image display panel, in which two or more groups of particles (5,6) having different colors and different charge characteristics are sealed between two substrates (1,2), at least one of two substrates being transparent, and, in which the particles, to which an electrostatic field produced by a pair of electrodes (3,4) provided on respective substrates is applied, are made to fly and move so as to display an image. At least one of the pair of electrodes is composed of split electrodes (3-1,3-2,4-1,4-2), and a voltage is applied between the split electrodes during the interval between displaying periods to fly and move the particles between the split electrodes in order to peel off adhered particles from the electrodes.

## Description

### TECHNICAL FIELD

The present invention relates to an image display device enables to repeatedly display or eliminate images accompanied by flight and movement of particles utilizing static charge.

### BACKGROUND ART

As an image display device substitutable for liquid crystal display (LCD), image display devices with the use of technology such as an electrophoresis method, an electro-chromic method, a thermal method, dichroic-particles-rotary method are proposed.

As for these image display device, it is conceivable as inexpensive visual display device of the next generation from a merit having wide field of vision close to normal printed matter, having smaller consumption with LCD, spreading out to a display for portable device, and an electronic paper is expected. Recently, electrophoresis method is proposed that microencapsulate dispersion liquid made up with dispersion particles and coloration solution and dispose the liquid between faced substrates. [The Imaging Society of Japan "Japan Hardcopy '99" (July 21-23, 1999) Transaction Pages 249-252]

However, in the electrophoresis method, there is a problem that a response speed is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. However, the structure becomes complicated because the charge transport layer and further a charge generation layer are to be arranged. In addition, it is difficult to constantly dissipate charges from the electro-conductive particles, and thus there is a drawback on the lack of stability.

### DISCLOSURE OF INVENTION

Objects of first to third aspects of the invention are to eliminate the drawbacks mentioned above and to provide an image display device of dry type, which can realize rapid response, simple and inexpensive construction, and excellent stability.

According to the first aspect of the invention, an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, is **characterized in that** the image display panel comprises matrix electrodes composed of pairs of electrodes arranged in a matrix manner, a display drive is performed by applying a high potential V_{H} or a low potential V_{L} to respective electrodes constituting the matrix electrodes, and respective electrodes are connected to an intermediate potential V₀ between the potentials V_{H} and V_{L} with a low impedance when the potential V_{H} or V_{L} is not applied to respective electrodes.

According to the image display device of the first aspect of the invention, since a novel image display device is constructed by arranging image display elements in a matrix manner, which can fly and move the particles by means of Coulomb forth and so on when an electrostatic field is directly applied to the particles, it is possible to obtain an image display device which can realize rapid response, simple and inexpensive construction, and excellent stability.

In the image display device according the first aspect of the invention, it is preferred that the intermediate potential V₀ is a ground potential. Moreover, it is preferred that the low impedance is 10 MΩ or less, more preferably 1 MΩ or less. Further, it is preferred that the matrix electrodes are connected to a matrix drive circuit, and the matrix drive circuit functions to supply the high potential V_{H}, the low potential V_{L} and the intermediate potential V₀ to respective electrodes constituting the matrix electrodes according to image data.

Moreover, according to the second aspect of the invention, an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, is **characterized in that** the improvement comprises an alternating voltage generating means for generating an alternating voltage with the frequency swept, and the alternating voltage from the alternating voltage generating means is applied between a pair of electrodes during the interval of display on the image display panel.

According to the image display device of the second aspect of the invention, since the alternating voltage is applied between a pair of electrodes during the interval of display, the particles indicates pulsating movements between the paired electrodes, and thus the particles adhered to respective electrodes can be peeled off. As a result, even if the display is performed repeatedly at.a large number of times, a state that the particles are adhered to the display surface does not occur, it is possible to effectively suppress color shading on the display.

From the viewpoint such that the particles are peeled off from the display surface reliably, it is preferred that the alternating voltage is within a frequency sweeping range of 10 Hz to 100 KHz, and amplitude is 1 V to 500 V.

Further, according to the third aspect of the invention, an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, is **characterized in that** at least one of each pair of electrodes is composed of split electrodes, and a voltage is applied between the split electrodes during the interval of display to fly and move the particles between the split electrodes.

According to the image display device of the third aspect of the invention, since at least one of each pair of electrodes is composed of split electrodes, it is possible to fly and move the particles between the split electrodes by applying a voltage between the split electrodes. Due to the particle flying movements, even if the display is performed repeatedly at a large number of times, it is possible to effectively suppress color shading on the display. As a result, it is possible to provide an image display device of dry type, which can realize rapid response, simple and inexpensive construction, and excellent stability.

In the image display device according to the third aspect of the invention, it is preferred that the voltage applied between the split electrodes is a DC voltage, an alternating voltage or a voltage in which the alternating voltage is superimposed on the DC voltage. Moreover, it is preferred that the alternating voltage is an alternating voltage with the frequency swept.

Moreover, in the first to third aspects of the invention, from the viewpoints of a responsibility of the particles when the voltage is reversed with respect to the paired electrodes and a memory property of the display image when the application of voltage is stopped with respect to the paired electrodes, it is preferred that an average particle diameter of the particles is 0.1 to 50 µm. Further, also from the viewpoints of the responsibility and the memory property mentioned above, it is preferred that a surface charge density of the particles measured by a carrier and in accordance with a blow-off method is not less than 5 µC/m² and not greater than 150 µC/m² in an absolute value. Furthermore, from the viewpoints of a charge reducing property, it is preferred that the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the Corona discharge. Moreover, from the viewpoints of a monochrome display, it is preferred that a color of the particles is a white or a black.

Further, in the image display panel according to the first to third aspects of the invention, from the viewpoints of a prevention of particle movements in a substrate parallel direction, a repeated durability, a memory property, and, a strength of image display panel by keeping a distance between the substrates even, it is preferred that the image display panel comprises one or more image display elements formed by separating respective paired electrodes of the matrix electrodes with each other by means of a partition wall.

### BRIEF DESCRIPTION OF DRAWINGS

Figs. 1a to 1c are schematic views respectively showing one embodiment of the image display element of the image display panel used for the image display device according to the first and second aspects of the invention and its display driving method.
Figs. 2a and 2b are schematic views respectively illustrating one embodiment of the image display device according to the first aspect of the invention in which the image display element is arranged in a matrix manner.
Fig. 3 is a block diagram depicting one embodiment of the image display device according to the second aspect of the invention.
Figs. 4a to 4c are schematic views respectively showing one embodiment of the image display element of the image display panel used for the image display device according to the third aspect of the invention and its display driving method.
Figs. 5a to 5d are schematic views respectively explaining a movement of particles between the split electrodes in the image display element of the image display panel used for the image display device according to the third aspect of the invention.
Fig. 6 is a schematic view illustrating the measuring instrument used for the measurement of surface potential of the particles in the image display device according to the invention.
Fig. 7 is a schematic view explaining one embodiment of the voltage apply pattern for moving the particles between the split electrodes in the image display device according to the third aspect of the invention.
Fig. 8 is a schematic view explaining another embodiment of the voltage apply pattern for moving the particles between the split electrodes in the image display device according to the third aspect of the invention.

### BEST MODE FOR CARRYING OUT THE INVENTION

First of all, an image display device according to a first aspect of the invention will be explained.

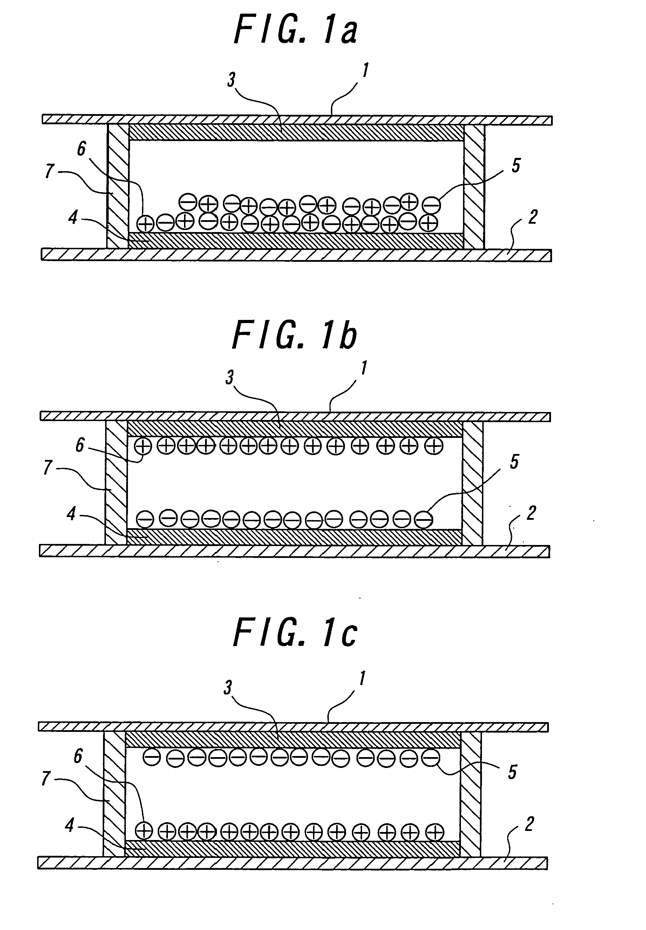

Figs. 1a to 1c are schematic views respectively showing one embodiment of the image display element of the image display panel used for the image display device according to the first aspect of the invention. In the embodiments shown in Figs. 1a to 1c, numeral 1 is a transparent substrate, numeral 2 is an opposed substrate, numeral 3 is a display electrode (transparent electrode), numeral 4 is an opposed electrode, numeral 5 is a negatively chargeable particle, numeral 6 is a positively chargeable particle and numeral 7 is a partition wall.

Fig. 1a shows a state such that the negatively chargeable particles 5 and the positively chargeable particles 6 are arranged between opposed substrates (transparent substrate 1 and opposed substrate 2). Under such a state, when a voltage is applied in such a manner that a side of the display electrode 3 becomes low potential and a side of the opposed electrode 4 becomes high potential, as shown in Fig. 1b, the positively chargeable particles 6 fly and move to the side of the display electrode 3 and the negatively chargeable particles 5 fly and move to the side of the opposed electrode 4 by means of Coulomb force. In this case, a display face viewed from a side of the transparent substrate 1 looks like a color of the positively chargeable particles 6. Next, when a voltage is applied in such a manner that the side of the display electrode 3 becomes high potential and the side of the opposed electrode 4 becomes low potential by reversing potentials, as shown in Fig. 1c, the negatively chargeable particles 5 fly and move to the side of the display electrode 3 and the positively chargeable particles 6 fly and move to the side of the opposed electrode 4 by means of Coulomb force. In this case, the display face viewed from the side of the transparent substrate 1 looks like a color of the negatively chargeable particles 5.

The display states shown in Figs. 1b and 1c are repeatedly changeable only by reversing the potentials of a power source, and thus it is possible to change colors on the display face reversibly by reversing the potentials of the power source as mentioned above. The colors of the particles can be arbitrarily selected. For example, when the negatively chargeable particles 5 are white color and the positively chargeable particles 6 are black color, or, when the negatively chargeable particles 5 are black color and the positively chargeable particles 5 are white color, a reversible image display between white color and black color can be performed. In this method, since the particles are once adhered to the electrode by means of an imaging force, a display image can be maintained for a long time after a voltage apply is stopped, thereby showing an excellent memory property.

In the first aspect of the invention, since the chargeable particles fly and move in the gas, the response speed of the image display is extremely fast and the response speed of shorter than 1 msec may be possible. Moreover, it is not necessary to use an orientation film and a polarizing plate as the liquid crystal display, and thus it is possible to make the structure simple and to realize the image display device having a large display area at a lower cost. In addition, it is stable with respect to a temperature variation and can be used in a wide temperature range from a low temperature to a high temperature. Further, it is not affected by an angle of visual field and has a high reflection coefficient. Therefore, it is easily viewable and has low electric power consumption. Furthermore, it has an excellent memory property and thus it is not necessary to use an electric power when the image is to be maintained.

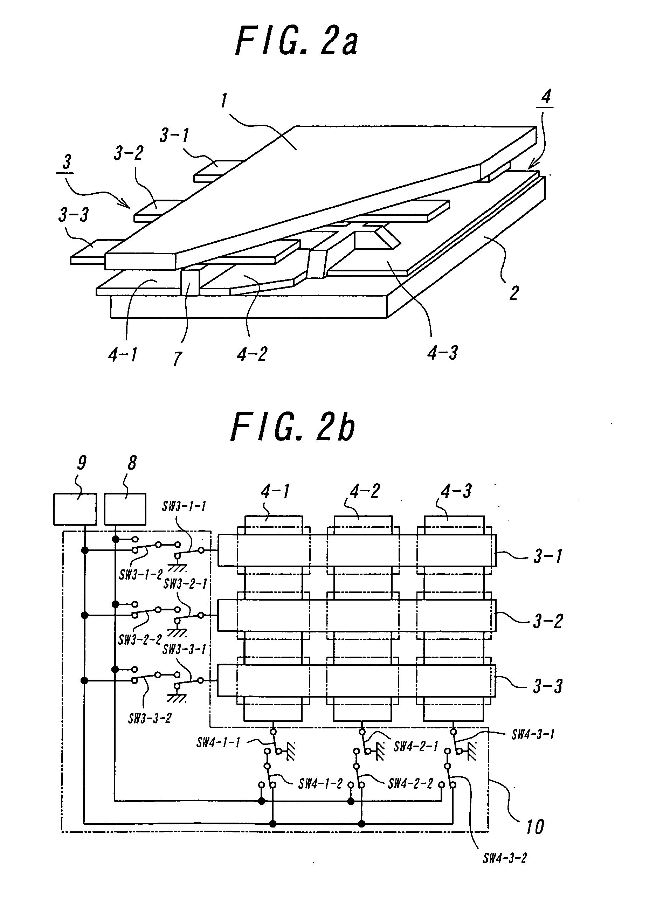

The image display device according to the first aspect of the invention comprises the image display panel in which the image display element mentioned above is arranged in a matrix manner. Figs. 2a and 2b show such one embodiment respectively. In this embodiment, 3x3 matrix is shown for convenience of explanation. When the number of the electrodes is n, it is possible to construct an arbitrary nxn matrix.

In the embodiment shown in Figs. 2a and 2b, display electrodes 3-1 to 3-3 arranged substantially in parallel with each other and opposed electrodes 4-1 to 4-3 arranged substantially in parallel with each other are provided respectively on the transparent substrate 1 and the opposed substrate 2 in such a manner that they are intersected with each other. Serial switches SW3-1-1 and SW3-1-2; serial switches Sw3-2-1 and SW3-2-2; and serial switches SW3-3-1 and SW3-3-2 are respectively connected to the display electrodes 3-1 to 3-3. In the same way, serial switches SW4-1-1 and SW4-1-2; serial switches SW4-2-1 and SW4-2-2; and serial switches SW4-3-2 and SW4-3-2 are respectively connected to the opposed electrodes 4-1 to 4-3.

The switches SW3-n-1 (n=1-3) and the switches SW4-n-1 (n=1-3) serve to switch the connection toward a ground level and the connection toward the next SW respectively. The switches SW3-n-2 (n=1-3) and the switches SW4-n-2 (n=1-3) serve to switch the connection toward a high voltage generating circuit 8 and the connection toward a low voltage generating circuit 9 respectively. Moreover, in this embodiment, the 3x3 image display elements are constructed by isolating them by means of the partitions 7, but the partition 7 is not an essential member and may be eliminated.

The operation of the matrix electrode constructed by the display electrodes 3-1 to 3-3 and the opposed electrodes 4-1 to 4-3 mentioned above is performed in such a manner that, in accordance with the image to be displayed, open/close operations of respective switches SW are controlled by means of a sequencer not shown and the 3x3 image display elements are displayed in sequence. This operation is the same as that of the known one.

In the image display device according to the first aspect of the invention having the construction mentioned above, a matrix drive circuit 10 applies high potential V_{H}, low potential V_{L} or intermediate potential V₀ to the respective electrodes in the matrix electrode at any time in accordance with the image data. A difference between the high potential V_{H} and the low potential V_{L} may be preferably set to 200 V or less. The intermediate potential V₀ may be preferably set to an intermediate value therebetween, and normally set to a ground potential. However, it is not limited, but the intermediate potential V₀ may be set to a constant potential near the ground potential, an average potential (V_{H}+V_{L})/2, or, a potential varying in accordance with the high potential V_{H} and the low potential V_{L}. Applications of the high potential and the low potential may be performed by a direct current or a current in which an alternating current is superimposed on the direct current.

In Figs. 2a and 2b, the respective electrodes, to which the driving operation is not performed, are connected to the ground potential by switching the switches SW utilizing a mechanical relay. However, it is not limited, but the electrodes may be switched by the switches SW utilizing a semiconductor element, or it may be connected to the ground potential through a fixed resistor.

In the image display element used for the image display device according to the first aspect of the invention, the image display operation is performed by selecting the case such that the high potential is applied to one electrode and the low potential is applied to the other electrode or the case such that the low potential is applied to one electrode and the high potential is applied to the other electrode. In the driving operation of the matrix electrode mentioned above, if the respective electrodes are maintained in a floating state after the high potential or the low potential is once applied to the respective electrodes till the next voltage applying operation, the potential is varied due to an affection of electric field from the other electrode, and thus it is not possible to perform an accurate image display. Therefore, in this invention, the matrix drive circuit 10 is designed in such a manner that the respective electrodes are connected to the intermediate potential V₀ such as the ground level with low impedance when the driving voltage (high potential or low potential) is not applied to the respective electrodes. In this case, it is preferred that the connection to the intermediate potential V₀ such as the ground level is performed with a low resistance of 10 MΩ or less, more preferably 1 MΩ or less.

Then, the image display device according to the second aspect of the invention will be explained.

The image display element and its driving operation of the image display panel constituting the image display device according to the second aspect of the invention are the same as those of the image display device according to the first aspect of the invention shown in Figs. 1a to 1c.

After the inventor's repeated experiments, it was found that, when the image display is performed by repeating the state shown in Fig. 1b and the state shown in Fig. 1c in many times, a part of the particles is adhered to the display face, and the color shading sometimes occurs. Especially in the case that the display face of the image display element is large in size, this phenomenon is easy to occur.

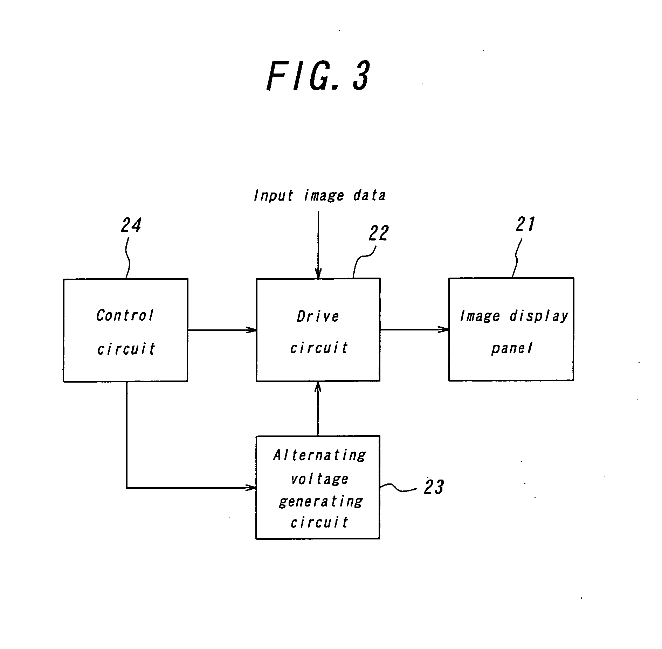

Therefore, in one embodiment of the image display device according to the second aspect of the invention, as shown in Fig. 3 by a block diagram, an alternating voltage generating circuit 23 for generating the alternating voltage with the frequency swept is connected to a drive circuit 22 of an image display panel 21 having the image display element 1 shown in Figs. 1a to 1c. The drive circuit 22 and the alternating voltage generating circuit 23 are controlled by a control circuit 24. Under the control mentioned above, the alternating voltage generating circuit 23 is driven so as to apply the alternating voltage between the electrodes of the respective image display elements of the image display panel 21 through the drive circuit 22 during the interval of display on the image display panel 21 driven by the drive circuit 22 in accordance with the input image data.

The alternating voltage is applied for example as follows. One method is to apply the alternating voltage to all the image display elements simultaneously during a vertical blanking interval of the image displaying. Another method is to divide the display face into a plurality of regions and to apply the alternating voltage to all the image display elements in the same region simultaneously during the same vertical blanking interval of the image displaying in the same region. Further another method is to apply the alternating voltage to the image display elements one by one at an arbitrary timing.

If the alternating voltage is applied to the respective image display elements in the manner mentioned above, the particles in the image display element are vibrated between the electrodes especially near the electrodes. This vibration movement is most activated at a frequency where a vibration frequency of the particles and a natural frequency of the electrode system are vibrated sympathetically, and thus a peel-off effect such that the particles adhered to the electrode are peeled off becomes largest. However, since the natural frequency is varied in accordance with the vibration system and its condition, it is not effective to apply the alternating voltage with a predetermined constant frequency. Therefore, if a frequency of the alternating voltage is swept between a high frequency and a low frequency preferably including the natural frequency of the electrode system, it is possible to obtain an extremely large peel-off effect.

In this case, a waveform of the alternating voltage may be an arbitrary shape such as sine wave, rectangle wave, triangular wave, saw-tooth wave and so on. Moreover, a frequency sweeping range of the alternating voltage may be set to a range of for example 10 Hz -100 KHz, preferably a range including the natural frequency of the electrode system as mentioned above. Further, amplitude of the alternating voltage may be set to for example 1V - 500 V so as to obtain a sufficient peel-off effect in cooperation with the frequency sweeping operation.

As mentioned above, in the image display device according to the second aspect of the invention, since the alternating voltage with the frequency swept is applied to the respective image display elements of the image display panel 21 during the interval of the image display operation of the image display panel 21 in accordance with the image data, there occurs no state such that the particles are adhered to the display face even if the image display operation is repeated in multiple times, and thus it is possible to effectively suppress the generation of display shading.

Then, an image display device according to a third aspect of the invention will be explained.

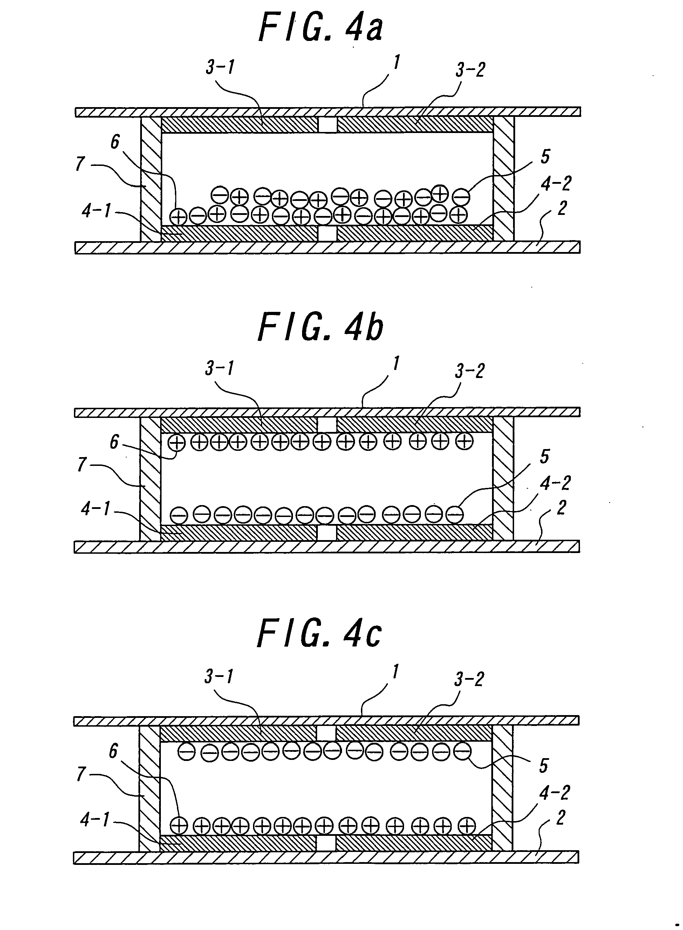

Figs. 4a to 4c are schematic views respectively showing one embodiment of the image display element of the image display panel used for the image display device according to the third aspect of the invention. In the embodiments shown in Figs. 4a to 4c, numeral 1 is a transparent substrate, numeral 2 is an opposed substrate, numerals 3-1, 3-2 are a display electrode (transparent electrode), numerals 4-1, 4-2 are an opposed electrode, numeral 5 is a negatively chargeable particle, numeral 6 is a positively chargeable particle and numeral 7 is a partition wall.

Fig. 4a shows a state such that the negatively chargeable particles 5 and the positively chargeable particles 6 are arranged between opposed substrates (transparent substrate 1 and opposed substrate 2). Under such a state, when a voltage is applied in such a manner that a side of the display electrodes 3-1, 3-2 becomes low potential and a side of the opposed electrodes 4-1, 4-2 becomes high potential, as shown in Fig. 4b, the positively chargeable particles 6 fly and move to the side of the display electrode 3 and the negatively chargeable particles 5 fly and move to the side of the opposed electrode 4 by means of Coulomb force. In this case, a display face viewed from a side of the transparent substrate 1 looks like a color of the positively chargeable particles 6. Next, when a voltage is applied in such a manner that the side of the display electrodes 3-1, 3-2 becomes high potential and the side of the opposed electrodes 4-1, 4-2 becomes low potential by reversing potentials, as shown in Fig. 4c, the negatively chargeable particles 5 fly and move to the side of the display electrode 3 and the positively chargeable particles 6 fly and move to the side of the opposed electrode 4 by means of Coulomb force. In this case, the display face viewed from the side of the transparent substrate 1 looks like a color of the negatively chargeable particles 5.

The display states shown in Figs. 4b and 4c are repeatedly changeable only by reversing the potentials of a power source, and thus it is possible to change colors on the display face reversibly by reversing the potentials of the power source as mentioned above. The colors of the particles can be arbitrarily selected. For example, when the negatively chargeable particles 5 are white color and the positively chargeable particles 6 are black color, or, when the negatively chargeable particles 5 are black color and the positively chargeable particles 5 are white color, a reversible image display between white color and black color can be performed. In this method, since the particles are once adhered to the electrode by means of an imaging force, a display image can be maintained for a long time after a voltage apply is stopped, thereby showing an excellent memory property.

In the image display device according to the third aspect of the invention, since the chargeable particles fly and move in the gas, the response speed of the image display is extremely fast and the response speed of shorter than 1 msec may be possible. Moreover, it is not necessary to use an orientation film and a polarizing plate as the liquid crystal display, and thus it is possible to make the structure simple and to realize the image display device having a large display area at a lower cost. In addition, it is stable with respect to a temperature variation and can be used in a wide temperature range from a low temperature to a high temperature. Further, it is not affected by an angle of visual field and has a high reflection coefficient. Therefore, it is easily viewable and has low electric power consumption. Furthermore, it has an excellent memory property and thus it is not necessary to use an electric power when the image is to be maintained.

In the meanwhile, when the image display is performed by repeating the state shown in Fig. 4b and the state shown in Fig. 4c in many times, a part of the particles is adhered to the display face, and the color shading sometimes occurs. Especially in the case that the display face of the image display element is large in size, this phenomenon is easy to occur, and it is a problem. On the other hand, according to the invention, at least one of the display electrode and the opposed electrode is divided into one-half to form split electrodes, and the particles fly and move between the split electrodes by applying the voltage between the split electrodes during the interval of the image display. As a result, the problem mentioned above is overcome.

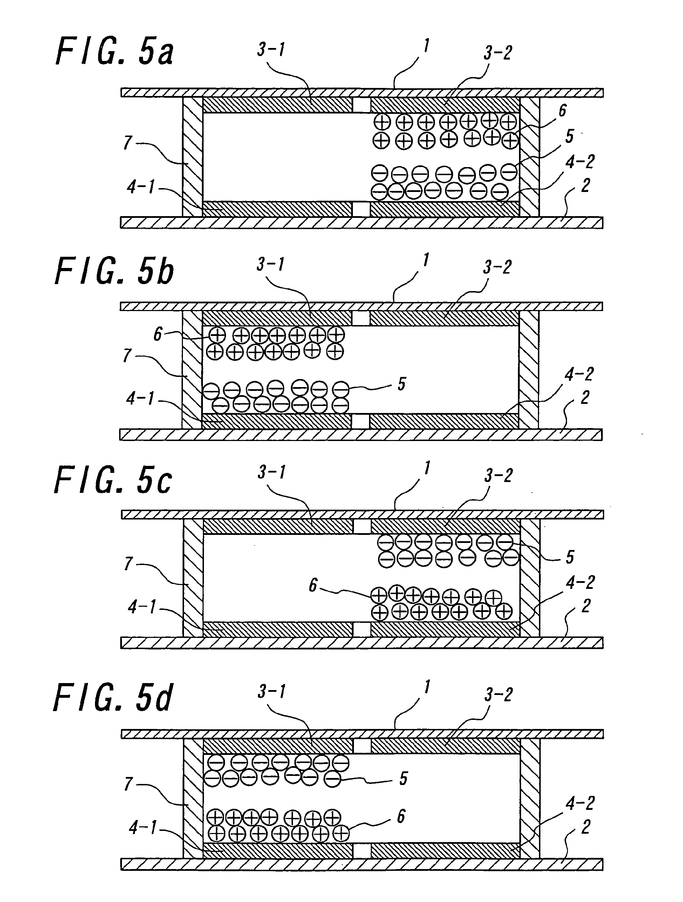

In the image display device according to the third aspect of the invention, the particles move in a horizontal direction with respect to the respective substrates as shown in Figs. 5a and 5b or Figs. 5c and 5d, during the interval of the vertical particle movement with respect to the respective substrates such as the interval between Figs. 4b and 4c (i.e. the interval of the image display operation). This particle horizontal movement can suppress the generation of color shading even if the image display operation is repeated in many times.

In one embodiment of the image display device according to the third aspect of the invention, the alternating voltage generating circuit (not shown) for generating the alternating voltage with the frequency swept is connected to the drive circuit (not shown) of the image display panel having the image display element shown in Fig. 4a. The drive circuit and the alternating voltage generating circuit are controlled by the control circuit (not shown). Under the control mentioned above, the alternating voltage generating circuit is driven so as to apply the alternating voltage between the electrodes of the respective image display elements of the image display panel through the drive circuit during the interval of display on the image display panel driven by the drive circuit in accordance with the input image data.

The alternating voltage is applied for example as follows. One method is to apply the alternating voltage to all the image display elements simultaneously during a vertical blanking interval of the image displaying. Another method is to divide the display face into a plurality of regions and to apply the alternating voltage to all the image display elements in the same region simultaneously during the same vertical blanking interval of the image displaying in the same region. Further another method is to apply the alternating voltage to the image display elements one by one at an arbitrary timing.

If the alternating voltage is applied to the respective image display elements in the manner mentioned above, the particles in the image display element are vibrated between the electrodes especially near the electrodes. This vibration movement is most activated at a frequency where a vibration frequency of the particles and a natural frequency of the electrode system are vibrated sympathetically, and thus a peel-off effect such that the particles adhered to the electrode are peeled off becomes largest. However, since the natural frequency is varied in accordance with the vibration system and its condition, it is not effective to apply the alternating voltage with a predetermined constant frequency. Therefore, if a frequency of the alternating voltage is swept between a high frequency and a low frequency preferably including the natural frequency of the electrode system, it is possible to obtain an extremely large peel-off effect.

In this case, a waveform of the alternating voltage may be an arbitrary shape such as sine wave, rectangle wave, triangular wave, saw-tooth wave and so on. Moreover, a frequency sweeping range of the alternating voltage may be set to a range of for example 10 Hz - 100 KHz, preferably a range including the natural frequency of the electrode system as mentioned above. Further, amplitude of the alternating voltage may be set to for example 1V - 500 V so as to obtain a sufficient peel-off effect in cooperation with the frequency sweeping operation. As mentioned above, in the image display device according to the invention, since the alternating voltage with the frequency swept is applied to the respective image display elements of the image display panel during the interval of the image display operation of the image display panel in accordance with the image data, there occurs no state such that the particles are adhered to the display face even if the image display operation is repeated in multiple times, and thus it is possible to effectively suppress the generation of display shading.

Hereinafter, electrode, substrate, particle and so on, which are the components of the image display device according to the first to third aspects of the invention, will be explained in detail.

In the case of the display electrode arranged on the transparent substrate, the electrode is formed of electroconductive materials which are transparent and having pattern formation capability. As such electroconductive materials, metals such as aluminum, silver, nickel, copper, and gold, or transparent electroconductive metal oxides such as ITO, electroconductive tin oxide, and electroconductive zinc oxide formed in the shape of thin film by sputtering method, vacuum vapor deposition method, CVD (Chemical Vapor Deposition) method, and coating method, or coated materials obtained by applying the mixed solution of an electroconductive agent with a solvent or a synthetic resin binder are used.

Typical examples of the electroconductive material include cationic polyelectrolyte such as benzyltrimethylammonium chloride, tetrabutylammonium perchlorate, and so on, anionic polyelectrolyte such as polystyrenesulfonate, polyacrylate, and so on, or electroconductive fine powders of zinc oxide, tin oxide, or indium oxide. Additionally, the thickness of the electrode may be suitable unless the electroconductivity is absent or any hindrance exists in optical transparency, and it is preferable to be 3 to 1000 mm, more preferable to be 5 to 400 nm. The foregoing transparent electrode materials can be employed as the opposed electrode, however, non-transparent electrode materials such as aluminum, silver, nickel, copper, and gold can be also employed.

It is preferred that an insulation coating layer is formed on the electrode so as not to reduce charged of the charged particles.

Then, the substrate will be explained. With regards to the substrate, at least one substrate must be transparent substrate capable of recognizing the displaying color from outside of the display panel, and a material with large transmission factor of visible light and with excellent heat resistance is preferable. The presence of flexibility as the image display device is selected appropriately by the usage, for example, the flexible materials are selected for the usage as an electronic paper and so on, and materials having no flexibility are selected for the usage as display units for portable devices such as cellular phones, PDAs, and notebook personal computers.

Examples of the substrate material include polymer sheets such as polyethylene terephthalate, polymer sulfone, polyethylene, or polycarbonate, and inorganic sheets such as glass, quartz or so. The thickness of the substrate is preferably 2 to 5000 µm, more preferably 5 to 1000 µm. When the thickness is too thin, it becomes difficult to maintain strength and distance uniformity between the substrates, and when the thickness is too thick, vividness and contrast as a display capability degrade, and in particular, flexibility in the case of using for an electron paper deteriorates.

Moreover, as shown in Figs. 1a to 1c, it is preferable to form partition walls around each display element. The partition walls may be formed in two parallel directions. By this structure, unnecessary particle movement in the direction parallel with the substrate is prevented. Further, durability repeatability and memory retention are assisted. At the same time, the distance between the substrates is made uniform as reinforcing the strength of an image display panel. The formation method of the partition wall is not particularly restricted, however, a screen printing method wherein pastes are overlapped by coating repeatedly on a predetermined position by screen plate; a sandblast method wherein partition materials are painted with a desired thickness entirely over the substrate and then after coating resist pattern on the partition materials which is wanted to be left as a partition, jetting abrasive to cut and remove partition materials aside from the partition part; lift-off method (additive method) wherein a resist pattern is formed on the substrate using photopolymer, and then after burying paste into a resist recess, removing the resist; photosensitive paste method wherein the photosensitive resin composition containing the partition materials is applied over the substrate and then obtaining a desired pattern by exposure & developing; and mold formation method wherein paste containing the partition materials is applied over the substrate and then forming a partition by compression bonding & pressure forming the dies having rugged structure; and so on are adopted. Further, modifying the mold formation method, relief embossing method wherein a relief pattern provided by a photopolymer composition is used as a mold is also adopted.

Then, the particles will be explained. Although any of colored particles negatively or positively chargeable having capability of flying and moving by Coulomb force are employable, spherical particles with light specific gravity are particularly preferable. The average particle diameter is preferable to be 0.1 to 50 µm, particularly to be 1 to 30 µm. When the particle diameter is less than this range, charge density of the particles will be so large that an imaging force to an electrode and a substrate becomes too strong; resulting in poor following ability at the inversion of its electric field, although the memory characteristic is favorable. On the contrary, when the particle diameter exceeds the range, the following ability is favorable, however, the memory characteristic will degrade.

Although the method for charging the particles negatively or positively is not particularly limited, a corona discharge method, an electrode injection-charge method, a friction charge method and so on are employable. It is preferable that the absolute value of the difference between the surface charge densities of the particles, which are measured by a blow-off method using a carrier, is not less than 5 µC/m² and not larger than 150 µC/m². When the absolute value of the surface charge density is less than this range, response speed to the change of an electric field will be late, and the memory property degrades. When the absolute value of the surface charge density exceeds this range, image force for the electrode or the substrate will be so strong that the memory property will be favorable, but following ability will be poor in the case where the electric field is inverted.

Hereinafter, the method of measuring the charge amount of particles and the method of measuring the specific gravity of particles, both necessary for calculating the surface charge density in the invention, will be explained.

### <Blow-off measuring theory and

In the blow-off method, a mixture of the particles and the carriers are placed into a cylindrical container with nets at both ends, and high-pressure gas is blown from the one end to separate the particles and the carriers, and then only the particles are blew off from the mesh of the net. In this occasion, charge amount of reverse polarity remains on the carriers with the same charge amount of the particles carried away out of the container. Then, all of electric flux by this electric charge are collected to Faraday cage, and are charged across a capacitor with this amount. Accordingly, the charge amount of the particles is determined as Q=CV (C: capacity, V: voltage across both ends of the capacitor) by measuring potential of both ends of the capacitor.

As a blow-off powder charge amount measuring instrument, TB-200 produced by Toshiba Chemical Co., Ltd. was used. Two kinds of positively chargeable and negatively chargeable resin were employed as the carriers, and charge density per unit area (unit: µC/m²) was measured in each case. Namely, F963-2535 available from Powder TEC Co., Ltd. was employed as a positive chargeable carrier (the carrier whose opponent is positively charged and itself tends to be negative) and F921-2535 available from Powder TEC Co., Ltd. was employed as negatively chargeable carrier (the carrier whose opponent is negatively charged and itself tends to be positive). The surface charge density of the particles was obtained from the measured charge amount, the average particle diameter and specific gravity of the particles measured separately.

### <Particle specific gravity measuring

The specific gravity was measured with the use of a hydrometer produced by Shimadzu Seisakusho Ltd. (brand name: Multi volume Density Meter H1305).

Because it is necessary for the particles to hold the charged electric charge, insulating particles with the volume specific resistance of 1×10¹⁰ Ω• cm or greater are preferable, and in particular, insulating particles with the volume specific resistance of 1×10¹² Ω • cm or greater are more preferable. Further, the particles with slow charge attenuation property evaluated by the measuring method below are more preferable.

Namely, applying the voltage of 8 kV to a Corona generator disposed with a distance of 1 mm to the surface to generate Corona discharge, charging the surface, and then, measuring the change of the surface potential, determine the suitability. In this occasion, it is preferable to select the material whose maximum surface potential will be 300 V or greater after 0.3 seconds, more preferable to select the material whose maximum surface potential will be 400 V or greater after 0.3 second as the material for composing the particles.

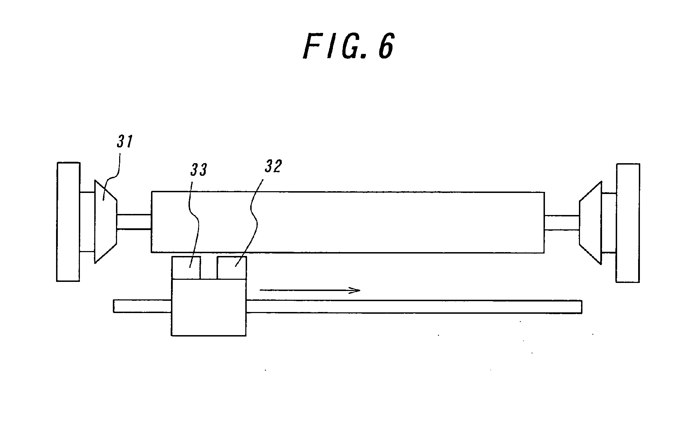

Additionally, the foregoing surface potential is measured by means of an instrument (CRT2000 produced by QEA Inc.) as shown in Fig. 6. In this instrument both end portions of a roll shaft being held with chuck 31, compact scorotron discharger 32 and surface potential meter 33 are spaced with predetermined interval to form a measurement unit. Facedly deploying the measurement unit with a distance of 1 mm from the surface of the particles, and by moving the measurement unit from one end portion of the roll shaft to the other end portion with an uniform speed, with the state that the roll shaft remains stopping and while giving surface charge, a method of measuring its surface potential is preferably adopted. Moreover, measurement environment should be settled at the temperature of 25 ± 8°C and the humidity of 55 ± 5% RH.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable. Two kinds or more of these may be mixed and used.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon. Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, and tartrazinelake. Examples of orange pigments include red chrome yellow, molybdenum orange, permanent orange GTR, pyrazolone orange, Balkan orange, indusren brilliant orange RK, benzidine orange G, and Indusren brilliant orange GK, Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, and brilliant carmine 3B.

Examples of purple pigments include manganese purple, first violet B, and methyl violet lake. Examples of blue pigments include Berlin blue, cobalt blue, alkali blue lake, Victoria blue lake, phthalocyanine blue, metal-free phthalocyanine blue, partially chlorinated phthalocyanine blue, first sky blue, and Indusren blue BC. Examples of green pigments include chrome green, chromium oxide, pigment green B, Malachite green lake, and final yellow green G. Further, examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc. These coloring agents may be used alone or in combination of two or more kinds thereof. Particularly, carbon black is preferable as the black coloring agent, and titanium oxide is preferable as the white coloring agent.

Although the manufacturing method of the particles is not specifically restricted, mixing/grinding method or polymerization method for producing toner of electrophotography is, for example, similarly employable. Further the method of coating resin or charge control agent and so on over the surface of powders such as inorganic or organic pigments is also employable.

The distance between the facing substrates is suitably adjusted in a manner where the particles can move and maintain the contrast of image display; however, it is adjusted usually within 10 to 5000 µm, preferably within 30 to 500 µm. The volume population of the particle existing in the space between the faced substrates is preferable to be 10 to 80%, more preferable to be 20 to 70%. When the volume population exceeds 80%, it causes some troubles in the particle movement, and when it is less than 10%, contrast tens to be indistinct.

In the image display panel of the first aspect of the invention, plural of the foregoing display element are dispose in a matrix form, and images can be displayed. In the case of monochrome display, one display element makes one pixel. In the case of full color display, three kinds of display elements, i.e., one group of display elements each having color plate of R (red), G (green) and B (blue) respectively and each having particles of black composes a set of disposed elements preferably resulting in the reversible image display panel having the sets of the elements.

The image display device according to the invention is applicable to the image display unit for mobile equipments such as notebook personal computers, PDAs, cellular phones and so on; to the electric paper for electric book, electric newspaper and so on; to the bulletin boards such as signboards, posters, blackboards and so on; and to the image display unit for electric calculator, home electric application products, auto supplies and so on.

Hereinafter, the present invention will be described in further detail with reference to Examples and Comparative Examples, which do not limit the scope of the present invention.

### Example 1 (first aspect of the invention)

The image display panel shown in Fig. 2 was assembled. A glass substrate was employed as the transparent substrate 1, an epoxy substrate was employed as the opposed substrate 2, an ITO electrode was employed as the display electrode 3 and a copper electrode was employed as the opposed electrode 4. On the surfaces of respective electrodes 3 and 4, an insulating silicon resin was coated with the thickness about 3 µm for the purpose of preventing an adhesion and a charge leakage. Black toners (spherical toners with average particle diameter of 8 µm, surface charge density of -50 µC/m², the surface potential of 450 V at 0.3 second after the foregoing surface potential measurement) for electro-photography were employed as the negatively chargeable particles 5. Polymerized particles of styrene-acrylic resin (spherical toners with average particle diameter of 8 µm, surface charge density of +45 µC/m², the surface potential of 500 V at 0.3 second after the foregoing surface potential measurement) produced by using titanium oxide as the white pigment and ammonium salt compound of fourth grade as the electric charge control agent were employed as the positively chargeable particles 6. For the purpose of charging the particles, an equivalent amount of both particles were mixed and agitated and frictional charging was conducted. Setting the height of the partition walls 7 as 200 µm, the volume population of the particles among the space between the substrates was adjusted to 50 %.

When DC voltage of -100 V was applied to the display electrode and DC voltage of +100 V was applied to the opposed electrode, the positively chargeable particles 6 flew and moved towards the display electrode and adhered there, and the negatively chargeable particles 5 flew and moved towards the opposed electrode and adhere there, so that a white color was displayed on the image display element. Respective electrodes were connected to the ground level so as be maintained at the ground potential except when applying the driving voltage. In the image display panel, there was no color shading and the excellent image was displayed. The response time for the applied voltage was measured to be 1 msec. Even after leaving the display device cutting off the applied voltage for one day, each display was maintained. Further, although the polarity of the applied voltage was reversed repeatedly for 10,000 times, there was almost no variation of the response speed.

### Example 2 (second aspect of the invention)

The image display panel shown in Fig. 1a was assembled. A glass substrate was employed as the transparent substrate 1, an epoxy substrate was employed as the opposed substrate 2, an ITO electrode was employed as the display electrode 3 and a copper electrode was employed as the opposed electrode 4. On the surfaces of respective electrodes 3 and 4, an insulating silicon resin was coated with the thickness about 1 µm for the purpose of preventing an adhesion and a charge leakage. Black toners (spherical toners with average particle diameter of 8 µm, surface charge density of -50 µC/m², the surface potential of 450 V at 0.3 second after the foregoing surface potential measurement) for electro-photography were employed as the negatively chargeable particles 5. Polymerized particles of styrene-acrylic resin (spherical toners with average particle diameter of 8 µm, surface charge density of +45 µC/m², the surface potential of 500 V at 0.3 second after the foregoing surface potential measurement) produced by using titanium oxide as the white pigment and ammonium salt compound of fourth grade as the electric charge control agent were employed as the positively chargeable particles 6. For the purpose of charging the particles, an equivalent amount of both particles were mixed and agitated and frictional charging was conducted. Setting the display area as 50 mm × 50 mm and the height of the partition walls 7 as 200 µm, the volume population of the particles among the space between the substrates was adjusted to 60%.

When DC voltage of-100 V was applied to the display electrode and DC voltage of +100 V was applied to the opposed electrode, the positively chargeable particles 6 flew and moved towards the display electrode 3 and adhered there, and the negatively chargeable particles 5 flew and moved towards the opposed electrode 4 and adhere there, so that a white color was displayed on the image display element. Then the applied voltages were reversed. In this case, the negatively changeable particles 5 flew and moved towards the display elements 3 and adhered there, an the positively changeable particles 6 flew an moved towards the opposed electrode 4 and adhered there, so that a black color was displayed on the image display element.

The response time for the applied voltage was measured to be 1 msec. Even after leaving the display device cutting off the applied voltage for one day, each display was maintained. Further, although the polarity of the applied voltage was reversed repeatedly for 10,000 times, there was almost no variation of the response speed.

Moreover, after the display cycle between the states shown in Figs. 1b and 1c by changing the polarity of voltages from the state shown in Fig. 1a was repeated at 50 times, sine wave alternating voltage with a width of 200 V swept by 50 Hz - 50 KHz was applied between the electrodes. Under an a condition, the display cycle was performed at total 10,000 times, so that the particles were not adhered to the electrodes and no color shading occurred.

For comparison, the display cycle between the states shown in Figs. 1b and 1c was only repeated by using the same image display panel mentioned above. In this case, when the display cycle was performed at 100 times, the particles were adhered to the electrodes and the color shading occurred.

### Example 3 (third aspect of the invention)

The image display panel shown in Fig. 4a was assembled. A glass substrate was employed as the transparent substrate 1, an epoxy substrate was employed as the opposed substrate 2, ITO electrodes were employed as the display electrodes 3-1, 3-2 and copper electrodes were employed as the opposed electrodes 4-1, 4-2. On the surfaces of respective electrodes 3-1, 3-2 and 4-1, 4-2, an insulating silicon resin was coated with the thickness about 3 µm for the purpose of preventing an adhesion and a charge leakage. Black toners (spherical toners with average particle diameter of 8 µm, surface charge density of -50 µC/m², the surface potential of 450 V at 0.3 second after the foregoing surface potential measurement) for electro-photography were employed as the negatively chargeable particles 5. Polymerized particles of styrene-acrylic resin (spherical toners with average particle diameter of 8 µm, surface charge density of +45 µC/m², the surface potential of 500 V at 0.3 second after the foregoing surface potential measurement) produced by using titanium oxide as the white pigment and ammonium salt compound of fourth grade as the electric charge control agent were employed as the positively chargeable particles 6. For the purpose of charging the particles, an equivalent amount of both particles were mixed and agitated and frictional charging was conducted. Setting the display area s 50 mm × 50 mm and the height of the partition walls 7 as 200 µm, the volume population of the particles among the space between the substrates was adjusted to 50%.

When DC voltage of -100 V was applied to the display electrode and DC voltage of +100 V was applied to the opposed electrode, the positively chargeable particles 6 flew and moved towards the display electrode and adhered there, and the negatively chargeable particles 5 flew and moved towards the opposed electrode and adhere there, so that a white color was displayed on the image display element. Respective electrodes were connected to the ground level so as be maintained at the ground potential except when applying the driving voltage. In the image display panel, there was no color shading and the excellent image was displayed. The response time for the applied voltage was measured to be 1 msec. Even after leaving the display device cutting off the applied voltage for one day, each display was maintained. Further, although the polarity of the applied voltage was reversed repeatedly for 10,000 times, there was almost no variation of the response speed.

Moreover, after the display cycle between the states shown in Figs. 4b and 4c by changing the potential (polarity) of the drive voltages from the state shown in Fig. 4a was repeated at 20 times (i.e. during the internal of the image display), the particle movement between the split electrodes was repeated at 2 times as shown in Figs. 5a and 5b. Under such a condition, the display cycle was performed at total 10,000 times, so that the particles were not adhered to the electrodes and no color shading occurred.

For comparison, the display cycle between the states shown in Figs. 4b and 4c was only repeated without performing the particle movement between the split electrodes as shown in Figs. 5a and 5b by using the same image display panel mentioned above. In this case, when the display cycle was performed at 100 times, the particles were adhered to the electrodes and the color shading occurred.

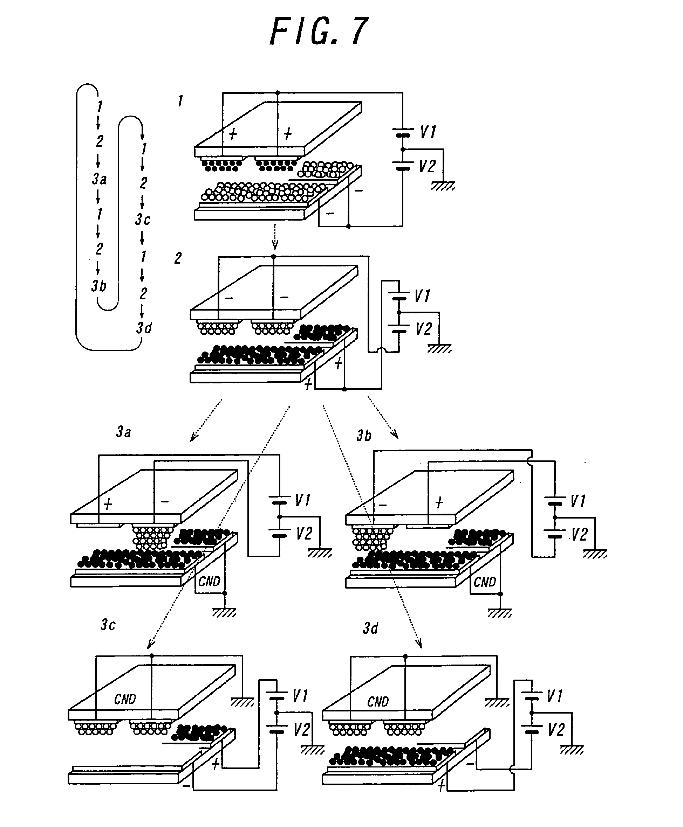

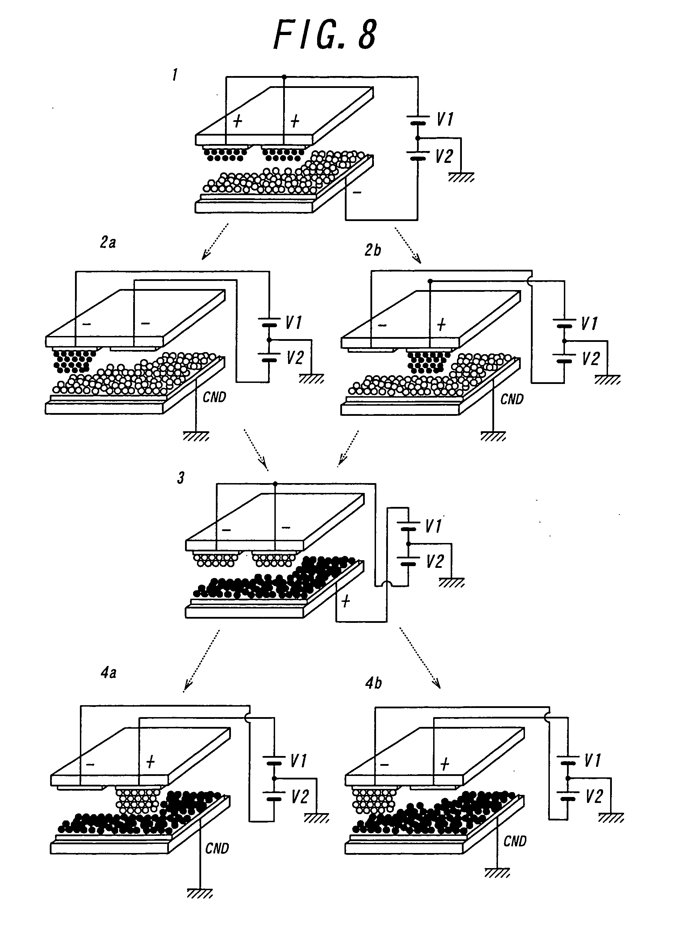

In order to perform the display cycles between the states shown in Figs. 4b and 4c and to perform the particle movement between the split electrodes as shown in Figs. 5a and 5b, use may be made of the voltage applying patterns shown in for example Figs. 7 and 8.

In Fig. 7, states 1 and 2 respectively indicate the display cycles shown in Figs. 4c and 4b, and states 3a to 3d respectively indicate the particle movement cycle between the split electrodes. In the states 3a and 3b continued from the state 2 of the display cycle, the positive voltage V1 and the negative voltage V2 are respectively applied to the split display electrodes and the opposed electrodes are grounded, so that the positively changeable particles shown in white circle are collected towards the split display electrode to which the negative voltage is applied. In the states 3c and 3d continued from the state 2 of the display cycle, the positive voltage V1 and the negative voltage V2 are respectively applied to the split opposed electrodes and the display electrodes are grounded, so that the negatively changeable particles shown in black circle are collected towards the split opposed electrode to which the positive voltage is applied. By suitably electing the display cycles and the particle movement cycle between the split electrodes mentioned above, it is possible to form for example the voltage applying pattern 1 → 2 → 3a → 1 → 2 → 3b → 1 → 2 → 3c → 1 → 2 → 3d → 1 → 2 ···. It should be noted that more complicated voltage applying patterns as compared with the above pattern may be used.

Fig. 8 shows the voltage applying pattern where only one of the display electrodes and the opposed electrodes (here, upper display electrode) was divided. In this case, both of the voltages V1 and V2 are smaller than the threshold voltage VF at which the particles start to fly and move, and the total voltage of V1 and V2 are larger than the threshold voltage VF (V1<VF, V2<VF, V1+V2>VF).

In Fig. 8, states 1 and 3 respectively indicate the display cycles shown in Figs. 4c and 4b, and states 2a, 2b and 4a, 4b respectively indicate the particle movement cycle between the split electrodes. In the states 2a and 2b continued from the state 1 of the display cycle, the positive voltage V1 and the negative voltage V2 are respectively applied to the split display electrodes and the opposed electrodes are grounded, so that the negatively changeable particles shown in black circle are collected towards the split display electrode to which the positive voltage is applied. In the states 3c and 3d continued from the state 3 of the display cycle, the positive voltage V1 and the negative voltage V2 are respectively applied to the split display electrodes and the opposeds electrode are grounded, so that the positively changeable particles shown in white circle are collected towards the display electrode to which the negative voltage is applied. By suitably selecting the display cycles and the particle movement cycle between the split electrodes mentioned above, it is possible to form a desirable voltage applying pattern.

### Industrial applicability

As is clearly understood from the explanations, according to the image display device of the first aspect of the invention, since a novel image display device is constructed by arranging image display elements in a matrix manner, which can fly and move the particles by means of Coulomb forth and so on when an electrostatic field is directly applied to the particles, it is possible to obtain an image display device which can realize rapid response, simple and inexpensive construction, and excellent stability.

Moreover, according to the image display device of the second aspect of the invention, since the alternating voltage is applied between a pair of electrodes during the interval of display, the particles indicates pulsating movements between the paired electrodes.

Further, according to the image display device of the third aspect of the invention, since at least one of each pair of electrodes is composed of split electrodes, it is possible to fly and move the particles between the split electrodes by applying a voltage between the split electrodes. Due to the particle flying movements, even if the display is performed repeatedly at a large number of times, it is possible to effectively suppress color shading on the display. As a result, it is possible to provide an image display device of dry type, which can realize rapid response, simple and inexpensive construction, and excellent stability.

According to a first aspect of the present invention there is provided an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, **characterized in that** the image display panel comprises matrix electrodes composed of pairs of electrodes arranged in a matrix manner, a display drive is performed by applying a high potential V_{H} or a low potential V_{L} to respective electrodes constituting the matrix electrodes, and respective electrodes are connected to an intermediate potential V₀ between the potentials V_{H} and V_{L} with a low impedance when the potential V_{H} or V_{L} is not applied to respective electrodes.

Preferably, the intermediate potential V₀ is a ground potential.

Preferably, the low impedance is 10 MΩ or less.

Preferably, the matrix electrodes are connected to a matrix drive circuit, and the matrix drive circuit functions to supply the high potential V_{H}, the low potential V_{L} and the intermediate potential V₀ to respective electrodes constituting the matrix electrodes according to image data.

According to a second aspect of the invention there is provided an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, **characterized in that** the improvement comprises an alternating voltage generating means for generating an alternating voltage with the frequency swept, and the alternating voltage from the alternating voltage generating means is applied between a pair of electrodes during the interval of displaying on the image display panel.

Preferably, the alternating voltage is within a frequency sweeping range of 10 Hz to 100 KHz, and amplitude is 1 V to 500 V.

According to a third aspect of the present invention there is provided an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, **characterized in that** at least one of each pair of electrodes is composed of split electrodes, and a voltage is applied between the split electrodes during the interval of displaying to fly and move the particles between the split electrodes.

Preferably, the voltage applied between the split electrodes is a DC voltage, an alternating voltage or a voltage in which the alternating voltage is superimposed on the DC voltage.

Preferably, the alternating voltage is an alternating voltage with the frequency swept.

Preferably, an average particle diameter of the particles is 0.1 to 50 µm.

Preferably, a surface charge density of the particles measured by a carrier and in accordance with a blow-off method is not less than 5 µC/m² and not greater than 150 µC/m² in an absolute value.

Preferably, the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the Corona discharge.

Preferably, a color of the particles is a white or a black.

Preferably, the image display panel comprises one or more image display elements formed by separating respective paired electrodes of the matrix electrodes with each other by means of a partition wall.

## Claims

1. An image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, **characterized in that** at least one of each pair of electrodes is composed of split electrodes, and a voltage is applied between the split electrodes during the interval of displaying to fly and move the particles between the split electrodes.

2. The image display device according to claim 1, wherein the voltage applied between the split electrodes is a DC voltage, an alternating voltage or a voltage in which the alternating voltage is superimposed on the DC voltage.

3. The image display device according to claim 1 or 2, wherein the alternating voltage is an alternating voltage with the frequency swept.

4. The image display device according to one of claims 1 to 3, wherein an average particle diameter of the particles is 0.1 to 50 µm.

5. The image display device according to one of claims 1 to 4, wherein a surface charge density of the particles measured by a carrier and in accordance with a blow-off method is not less than 5 µC/m² and not greater than 150 µC/m² in an absolute value.

6. The image display device according to one of claims 1 to 5, wherein the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the Corona discharge.

7. The image display device according to one of claims 1 to 6 wherein a color of the particles is a white or a black.

8. The image display device according to one of claims 1 to 7, wherein the image display panel comprises one or more image display elements formed by separating respective paired electrodes of the matrix electrodes with each other by means of a partition wall.
